# EUROPEAN PATENT APPLICATION

(11) **EP 4 790 192 A1**
(43) Date of publication of application: **12.08.2026**
(21) Application number: 26157573.2
(22) Date of filing: 10.02.2026
(51) Int. Cl.: E02F 9/08, B60K 1/04, B60K 11/06

(54) **AN ELECTRIC MICRO-EXCAVATOR**

(30) Priority: 10.02.2025 GB 202501941
(71) Applicant: J.C. Bamford Excavators Limited, Uttoxeter Staffordshire ST14 5JP (GB)
(72) Inventor: HUTTON, David John, Uttoxeter, ST14 5JP (GB); INGRAM, Scott John, Uttoxeter, ST14 5JP (GB)
(74) Representative: Foot, Paul Matthew James

(57) **Abstract**

Disclosed is an excavator comprising: a ground engaging structure comprising a pair of track assemblies for propelling and steering the excavator; a rotatable superstructure mounted to the ground engaging structure; a working arm mounted to the rotatable superstructure, the working arm comprising one or more hydraulic actuators arranged to operate the working arm; a hydraulic pump in hydraulic flow communication with the one or more tracks and/or the one or more hydraulic actuators; a hydraulic tank connected to the hydraulic pump; at least one electric motor configured to drive the hydraulic pump to provide a flow of hydraulic fluid to propel the one or more track assemblies and/or operate the hydraulic actuators; at least one battery for providing electrical power to the hydraulic pump; and, at least one electrically operated fan configured to provide a flow of cooling air onto the hydraulic tank to cool the hydraulic fluid therein.

## Description

### FIELD

The present invention relates to a micro-excavator, in particular an electric micro-excavator.

### BACKGROUND

Conventional excavators are typically powered by a diesel engine which is mounted in a rotating superstructure. As the desire for green alternatives becomes more prominent, there is a continuing challenge to provide suitable electrical excavators. It will be appreciated that for larger excavators, typically above three tonnes, the size, capacity and charging times of batteries becomes impractical with current technology. However, for machines under three tonnes, the use of electric excavators is feasible.

The packaging of the electrical equipment is a critical part of realising electric excavators. This is particularly so for very small machines, so called micro-excavators, where there is a desire to maximise the battery capacity whilst accommodating all of the necessary ancillary components such as the electric motors, control electronics, hydraulic systems, actuators and propulsion systems.

The present disclosure seeks to provide an improved electric excavator.

### SUMMARY

The present invention provides an excavator in accordance with the appended claims.

A first aspect of the present disclosure provides a working machine in the form of an excavator. The excavator may be a so-called micro-excavator.

The excavator may comprise a ground engaging structure comprising a pair of track assemblies or wheels for propelling and steering the excavator and a rotatable superstructure mounted to the ground engaging structure.

A working arm may be mounted to the rotatable superstructure, the working arm comprising one or more actuators arranged to operate the working arm. The actuators may be hydraulic actuators such as conventional hydraulic cylinders.

A hydraulic pump may be provided in hydraulic flow communication with the one or more track assemblies to provide propulsive effort. The hydraulic pump may be in hydraulic flow communication with the one or more hydraulic actuators to provide work effort for operating the working arm. A hydraulic tank may be connected to the hydraulic pump.

The excavator may comprise at least one electric motor which may configured to drive the hydraulic pump to provide a flow of hydraulic fluid to propel the one or more track assemblies and/or operate the actuators.

The excavator may comprise at least one battery for providing electrical power to the hydraulic pump. The at least one battery may comprise a plurality of batteries assembled and connected to provide a single battery pack. The at least one battery may provide the power for powering the track assemblies and the working arm actuators. The battery pack may be the sole source of electrical power for powering the track assemblies and working arm actuators, e.g. via the hydraulic pump.

The excavator may comprise at least one electrically operated fan configured to provide a flow of cooling air onto the hydraulic tank to cool the hydraulic fluid therein. The hydraulic tank may be elongate. The fan may be located and oriented to direct air along the length of the hydraulic tank to provide cooling to the hydraulic tank. The fan may be located towards an end of the hydraulic tank.

The hydraulic tank may be located along a length of the superstructure in a fore-aft direction. The hydraulic tank may be proximate to or abut a lateral edge of the superstructure. The lateral edge may be a lower lateral edge. The fan may be located in a forward or aft portion of the superstructure.

The fan may comprise a fan inlet in flow communication with the exterior of the superstructure. The fan inlet may be an aperture provided in a chassis or body work of the superstructure. The inlet may be located in a lower edge region or underside of the superstructure. The inlet may be provided in a skirt portion of the superstructure. The inlet may be provided on the front of the superstructure. The inlet may be provided to one side of a kingpost to which the working arm is mounted to the superstructure.

The hydraulic tank may extend for at least 50% of the length of the superstructure, preferably 75%, more preferably 80%.

The superstructure may comprise body work which provides a housing for the hydraulic tank. The body work may comprise an upper portion which may be referred to as a hood. The hood may comprise an enclosed volume in which the at least one battery or a battery pack is located. An operator seat may be located on the hood. The body work may comprise a lower portion which may be referred to as a skirt.

The at least one fan may be a first fan. The excavator may comprise at least a second fan. The second fan may be configured to provide a flow of cooling air on to the electric motor to cool the electric motor. The flow of cooling air provided by the second fan may be directed towards an external surface of the electric motor. The first and/or second fan may define a flow of air along a principal flow axis. The flow axis may be defined by the rotational axis of the fan. The electric motor may be located along the rotational axis of the fan. In some embodiments, the flow of cooling air from either the first or second fan may be directed by one or more ducts. The principal flow axis may correspond to the longitudinal axis of the hydraulic tank.

The second fan may be located within the superstructure and may be configured to recirculate air within the superstructure and onto the electric motor. That is, the second fan may be located to receive air internally from the superstructure rather than directly from an external inlet.

The second fan may be located in a flow path of the first fan such that air from the first fan enters the second fan so as to be energised and recirculated within the superstructure.

The second fan may be located towards a second end of the elongate hydraulic tank and the first fan may be located towards a first end of the hydraulic tank.

The superstructure may comprise an outlet for cooling air to exit the superstructure. The outlet may be provided on an underside of the superstructure.

The excavator may further comprise a controller configured to operator the hydraulic tank cooling fan. The controller may be configured to receive an indication of the operating temperature of the hydraulic fluid and operate the first fan when the indicated operating temperature of the hydraulic fluid is above a first threshold.

The excavator may comprise an inverter for controlling the electric motor. The electric motor may comprise a temperature sensor and wherein inverter temperature sensor is used to provide the indication of the operating temperature of the hydraulic fluid.

The controller may be configured to operate the electric motor fan. The controller may be configured to receive an operating temperature of the electric motor and operate the second fan when the operating temperature of the electric motor is above a second threshold. The electric motor may comprise a temperature sensor to provide the operating temperature of the electric motor.

The excavator may comprise a power distribution unit located proximate the at least one battery. The power distribution unit may comprise a plurality of connectors for connecting wiring associated with the electric motor and/or battery and/or charging unit.

The at least one battery and power distribution unit may be mounted to the rotatable superstructure and housed beneath a hood which is hinged from a forward edge thereof such that raising the hood about the hinge exposes the power distribution unit at a rear end of the rotatable superstructure.

The hood may be configured to move between a closed position and an open position, wherein when in the open position, the power distribution unit is fully accessible.

The vertical dimension between the closed position and open position is between 350mm and 450mm.

The open position of the hood may be restricted by one or more mechanical restraint, e.g. one or more gas struts.

The excavator may comprise an operator seat. The operator seat may be located on the hood. Raising the hood may move the operator seat upwards.

The power distribution unit may comprise a back plate and a cover plate. The back plate and cover plate may combine to provide an enclosure. The back plate may be mounted to a sub-assembly which includes the at least one battery or battery pack.

The power distribution unit may comprise a high voltage portion and a low voltage portion, and the high voltage portion is housed within the cover plate.

The excavator may further comprise a charging port for connecting a charging cable. The hood may comprise an access panel which is hinged or otherwise removable to provide access to the charging port.

The excavator may further comprise an electrical isolator for electrically isolating the excavator The isolator may be located behind the access hatch.

The access hatch may be located on a rear facing surface of the superstructure.

The excavator may be a micro-excavator. The micro-excavator may a transport mass of less than 1.5T, preferably less than 1T.

The electric motor and hydraulic pump may be located on a first sub-assembly, and the at least one battery is located on a second sub-assembly, wherein the first sub-assembly is located below the second sub-assembly within the superstructure.

The first sub-assembly may comprise a mounting arrangement mounted to the superstructure mounting points. The electric motor and hydraulic pump may be located below the mounting arrangement.

The electric motor and hydraulic pump may be suspended below the mounting arrangement on anti-vibration mounts.

The first sub-assembly may receive and provide structural support for the second sub-assembly.

The second sub-assembly may comprise a base unit on which the at least one battery is located and which is attached to the first sub-assembly.

The excavator may further comprise a power distribution unit. The power distribution unit forming part of the second sub-assembly.

The excavator may further comprise an inverter. The inverter may form part of the first sub-assembly.

The second sub-assembly may comprise a charging port for receiving an external charging cable and/or an electrical isolator.

In one aspect, the present disclosure may provide an excavator comprising: a ground engaging structure comprising a pair of track assemblies for propelling and steering the excavator; a rotatable superstructure mounted to the ground engaging structure; a working arm mounted to the rotatable superstructure, the working arm comprising one or more actuators arranged to operate the working arm; a hydraulic pump in hydraulic flow communication with the one or more track assemblies and/or the one or more hydraulic actuators to provide propulsive effort or work effort respectively; a hydraulic tank connected to the hydraulic pump; at least one electric motor configured to drive the hydraulic pump to provide a flow of hydraulic fluid to propel the one or more track assemblies and/or operate the actuators; at least one battery for providing electrical power to the hydraulic pump; and, at least one electrically operated fan configured to provide a flow of cooling air onto the hydraulic tank to cool the hydraulic fluid therein.

In another aspect, the present disclosure may provide a micro-excavator comprising:
a ground engaging structure comprising a pair of track assemblies for propelling and steering the excavator;
a rotatable superstructure mounted to the ground engaging structure;
a working arm mounted to the rotatable superstructure, the working arm comprising one or more actuators arranged to operate the working arm;
at least one electric motor configured to drive a hydraulic pump in hydraulic flow communication with the one or more track assemblies and/or the one or more hydraulic actuators to provide propulsive effort or work effort respectively;
at least one battery for providing electrical power to the hydraulic pump;
a power distribution unit located proximate the at least one battery, the power distribution unit comprising a plurality of connectors for connecting wiring associated with the electric motor and/or battery,
wherein the at least one battery and power distribution unit is mounted to the rotatable superstructure and housed beneath a hood which is hinged from a forward edge thereof such that raising the hood about the hinge exposes the power distribution unit at a rear end of the rotatable superstructure.

In another aspect, the present disclosure provides an excavator comprising:
a ground engaging structure comprising a pair of track assemblies for propelling and steering the excavator;
a rotatable superstructure mounted to the ground engaging structure; a working arm mounted to the rotatable superstructure, the working arm comprising one or more hydraulic actuators arranged to operate the working arm;
a hydraulic pump in hydraulic flow communication with the one or more track assemblies and/or the one or more hydraulic actuators;
a hydraulic tank connected to the hydraulic pump; at least one electric motor configured to drive the hydraulic pump to provide a flow of hydraulic fluid to propel the one or more tracks and/or operate the hydraulic actuators;
at least one battery for providing electrical power to the hydraulic pump, wherein the electric motor and hydraulic pump are located on a first sub-assembly, and the at least one battery is located on a second sub-assembly, wherein the first sub-assembly is located below the second sub-assembly within the superstructure.

The skilled person will appreciate that except where mutually exclusive, a feature described in relation to any one of the aspects, embodiments or examples described herein may be applied mutatis mutandis to any other aspect, embodiment or example. Furthermore, except where mutually exclusive, any feature described herein may be applied to any aspect and/or combined with any other feature described herein.

### BRIEF DESCRIPTION OF DRAWINGS

Embodiments will now be described by way of example only with reference to the accompanying figures, in which:
Figure 1 shows a side view of an excavator according to the present disclosure;
Figure 2 shows the excavator of Figure 1 with some parts removed for clarity;
Figure 3 shows the excavator with a hood pivoted into a raised position;
Figure 4 shows the excavator with the body work of the superstructure removed;
Figure 5 shows the excavator of Figure 4 from a rearward facing position;
Figure 6 shows the internal components of the power distribution unit;
Figure 7 shows the underside of the excavator;
Figure 8 shows an air inlet and fan of the cooling system;
Figure 9 shows an underside of the superstructure and air outlet;
Figure 10 shows a first sub-assembly comprising the electric motor and hydraulic pump;
Figure 11 shows the first sub-assembly mounted to the superstructure;
Figure 12 shows a second sub-assembly comprising at least one battery and a power distribution unit;
Figure 13 shows the second sub-assembly mounted to the first sub-assembly in situ.

### DETAILED DESCRIPTION

In the following detailed description, numerous specific details are set forth in order to provide a thorough understanding of various embodiments and the inventive concepts disclosed throughout. However, those skilled in the art will understand that: the present invention may be practiced without these specific details or with known equivalents of these specific details; that the present invention is not limited to the described embodiments; and, that the present invention may be practiced in a variety of alternative embodiments. It will also be appreciated that well known methods, procedures, components, and systems may have not been described in detail.

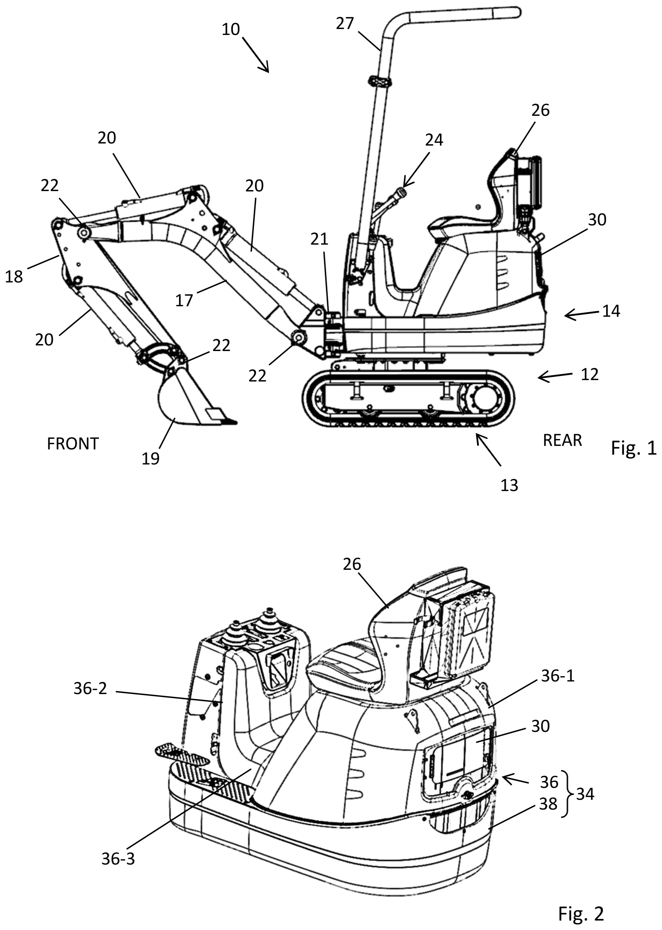

Figure 1 shows a working machine 10, in the form of a micro-excavator. A micro-excavator is a very compact excavator which will typically have an operating weight of between 0.7 tonnes and 1T and would typically not include an operator cab. This is in contrast to mini-excavators which may have an operating weight between 1T and 3T and typically including an operator cab, and midi-excavators having a weight between 3T and 10T and typically having an operator cab. Micro-, mini- and midi- excavators may also be collectively referred to as compact excavators. Despite the size classifications given here, there is no industry wide commonly agreed definitions and a micro-excavator may permissibly have a weight extending up to around 1.5T.

The illustrated embodiment described herein is referred to as a micro-excavator with a transport weight of approximately 1 tonne, but the concepts disclosed herein may be applicable to smaller or larger machines alike.

The micro-excavator 10 shown in Figure 1 has a ground engaging structure 12 comprising a left track assembly 13 and right track assembly (obscured) onto which is mounted a slewing/rotatable superstructure 14. A working arm 16 is mounted to the superstructure 14. The track assemblies are conventional and include endless tracks which are driven by hydraulic motors (not shown) to provide propulsion and differential track steering as well known in the art.

The working arm 16 is conventional and comprises a boom 17, a dipper 18, and a bucket 19 extending sequentially from the superstructure 14 and operable via dedicated actuators 20 which may be electric but are typically hydraulic cylinders, as shown. The hydraulic cylinders are supplied with a flow of hydraulic fluid from a pump as well known in the art.

The present disclosure relates to a fully electric machine meaning propulsive effort and the working arm actuation is derived from one or more electric motors receiving electrical energy from one or more electrical energy store, e.g. a battery pack. In the case of a hydraulically powered machine, this requires a hydraulic pump driven by an electric motor, as described below.

The working arm 16 is attached at a first proximal end to the superstructure via a king post 21 which allows the working arm 16 to rotate about a vertical axis relative to the superstructure 14. The boom 17, dipper 18 and bucket 19 are pivotable about respective generally horizontal axes 22.

Operator controls 24 are provided to enable an operator sitting on an operator seat 26 to propel and steer the excavator 10 via the left 13 and right track assemblies and operate the working arm 16 to excavate material in a conventional manner.

Whilst there is no operator cab on this micro-excavator 10, there is provided a conventional tip-over protection structure, TOPS, frame 27 which extends from a forward pillar of the superstructure over the operator seat so is to provide some protection in the event of the machine rolling over in use.

For the purpose of the disclosure, references to the front and rear of the machine 10 and superstructure 14 should be taken with reference to the direction the operator faces in a normal working position. Thus, the operator controls 24 are forward of the operator seat 26 and an access hatch 30 for a charging port 32 is to the rear of the superstructure 14.

Figure 2 shows a perspective view of the excavator superstructure 14 with the working arm, TOPS frame 27, operator control levers 24 and ground engaging structure 12 removed for clarity. The exterior of the superstructure 14 comprises one or more body panels 34 which provide an aesthetic finish to the machine and a housing for internal components described in more detail below.

The body panels 34 in the illustrated embodiment include an upper panel 36 onto which the operator seat 26 is mounted and a lower panel 38. The upper panel 36 may be referred to as a hood 36. The lower panel 38 may be referred to as a skirt 38. The body panels 34 may be mounted to an internal chassis 40 which provides the required structural support and rigidity for the superstructure 14 in a conventional manner. In the illustrated embodiment, the skirt 38 is contiguous with the chassis 40 and provides a structural role in maintaining the rigidity of the structure.

In the illustrated embodiment the hood 36 comprises a main housing portion 36-1 and a control pillar portion 36-2. The main housing portion 36-1 and control pillar portion 36-2 are connected by a bridge 36-3 which is straddled by an operator when sat in the operator seat 26.

The main housing portion 36-1 covers the battery pack 42, electronic components, such as the charging unit 44, inverter 45 and power distribution unit 46, and portion of a hydraulic tank 48. The hood 36 includes an openable/removable cover plate, which may be referred herein as an access hatch 30, on the rear surface thereof to allow access for charging port 32 for connecting a charger for charging the battery pack 42 and/or an isolator 50 for electrically isolating the machine, as described below.

The skirt 38 defines the exterior of the base of the superstructure 14. The skirt 38 extends fully and continuously around the lower portion of the superstructure 14. The skirt 38 provides an enclosure for the superstructure chassis 40, the lower extremities of the hydraulic tank 48, the electric motor 52, the charging unit 44, inverter 45 and the hydraulic pump 56. It will be appreciated that other components may be enclosed in either or both the hood 36 and the skirt 38. The hood 36 and skirt 38 may meet one another at a joint line to provide a continuous external body panel. In the illustrated embodiment the skirt 38 provides the structural support for the various components.

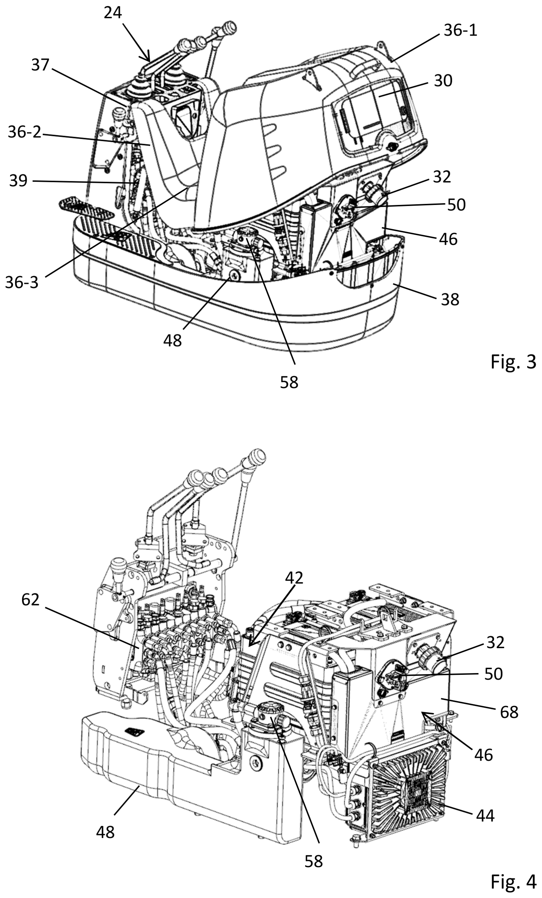

As shown in Figure 3, the hood 36 may be moveable to an open position from the closed position shown in Figure 2 to enable access to the PDU 46, as described below.

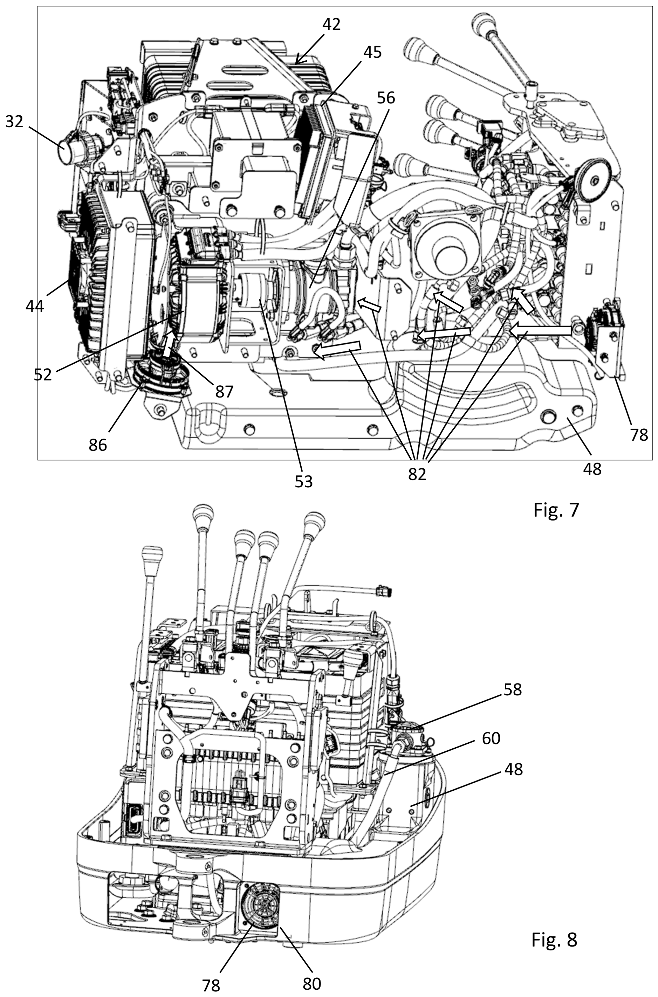

Figures 4 to 8 show the general arrangement in which the battery pack 42 is located beneath the operator seat 26 in an aft portion of the superstructure 14, the PDU 46 is located to the rear of the battery pack 42 to allow access when the hood 36 is provided in an open position, the charging port 32 and isolator 50 are located to the rear of the battery pack 42 to allow an operator to access from the rear of the machine, optionally through an access hatch 30. The electric motor 52 and hydraulic pump 56 may be located in an aft portion of the superstructure 14 and below the battery pack 42. The charging unit 44 may be located to the rear of superstructure 14 below the battery pack 42 or, more specifically, below the PDU 46 to allow convenient connection. The invertor is located beneath a front corner of the battery pack 42 as best seen in Figure 7.

The hydraulic tank 48 may be elongate and extend along a lateral edge of the superstructure 14 behind the skirt 38. In the illustrated embodiment, the hydraulic tank 48 extends along the left of the superstructure 14, but this is not a limitation and the tank 48 may be placed in other locations. The hydraulic tank 48 may extend along at least 50% of the length of the superstructure. In the illustrated embodiment, the hydraulic tank 48 extends along approximately 75% of the length of the superstructure 14. The longitudinal extent of the hydraulic tank may help increase the surface to volume ratio to improve cooling of the enclosed hydraulic fluid and also provide an increased surface area along which the cooling air may flow.

The hydraulic tank 48 may comprise a filter unit 58 on a return line 60 which also doubles as a fill aperture when removed. As will be appreciated, the hydraulic tank 48 is connected to the pump 56, a main control valve 62 and the various hydraulic actuators via appropriate hoses.

The battery pack 42 may be any suitable energy store and may comprise one or more individual batteries as known in the art.

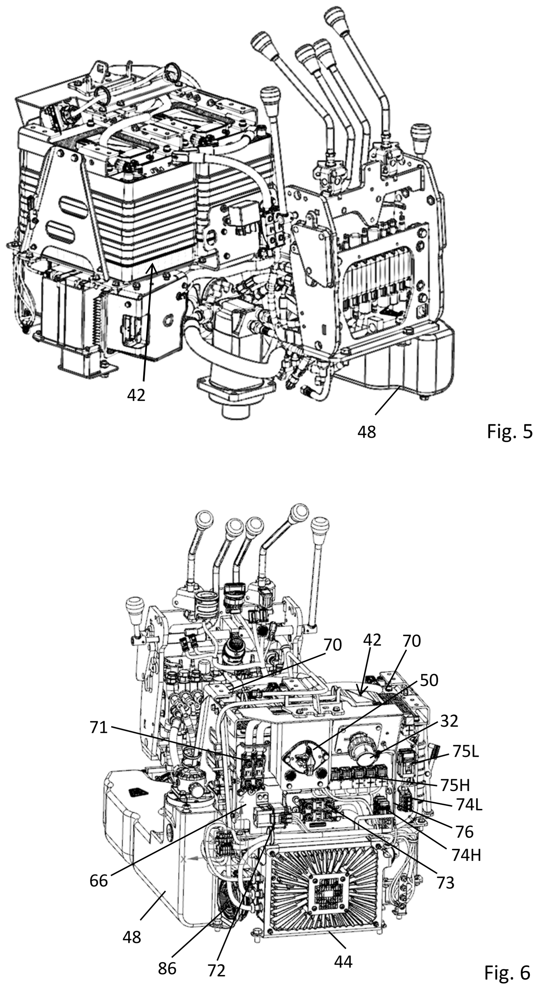

Referring specifically to Figure 6, the power distribution unit 46 represents a common location on the machine 10 in which the principal electric connections can be conveniently made. As such, the PDU 46 may include numerous connectors, circuit protection devices and switch gear which enable the battery pack, charging port and charging unit, invertor and other electrical equipment to be conveniently connected during assembly and accessible for maintenance or fault finding in use. The power distribution unit 46 may comprise a back plate 66 and a cover 68 which combine to provide a housing for the various electrical components of the power distribution unit 46.

In the illustrated embodiment, the battery pack 42 comprises two batteries each having a high voltage e.g. 48V, cable 69 attached to the appropriate terminals 70 which are located on the top side of the batteries. The cables 69 extend from the terminals 70 into an aperture on the forward side of the power distribution unit 46 before terminating in connectors 71 which provide electrical communication with the inverter 45. In the illustrated embodiment, the connectors include a circuit protection device, but this may be omitted in other embodiments.

The battery connectors 71 are internally wired into a contactor 72 which controls the supply of electricity to the inverter 45. Located towards a lower edge of the power distribution unit 46 there is a further connector 73 which couples the inverter 45 to the high voltage power cables via internal wiring (not shown). The upper terminal of the lower connector 73 is connected to the charging unit 45. In addition to the connectors 71, 73 and switchgear 72, there are a number of conventional fuses 74 which provide circuit protection. Also included are a number of relays 75H, 75L for respectively controlling various high voltage and low voltage electrical components in the machine.

The power distribution unit 46 may be split into a high voltage portion and a low voltage portion. Thus, there can be seen a partitioning wall 76 towards the right hand side of the power distribution unit 46 in which the high voltage connections and switchgear are provided on the left hand side and enclosed by the removable cover plate 68 of the housing, with the low voltage fuses and connectors being provided on the right hand side and uncovered in the illustrated embodiment. As such, the low voltage features and connectors are generally accessible when the hood 36 of the machine 10 is in the open position, whereas the high voltage components require the cover to be removed.

The power distribution unit 46 of the illustrated embodiment also advantageously includes the charging port 32 to which an external power supply can be connected to allow charging of the battery pack 42, and an isolator 50 which isolates all of the electrical systems in the working machine. As described previously, the charging port 32 and/or isolator 50 may be located behind the hinged access hatch 30 to provide convenient regular access for an operator. The size of the access hatch 30 is restricted to provide access only to the charging port 32 and/or isolation switch 50 which is generally easier to open and close and reduces the amount of room required to open and allow charging.

In order to allow testing and maintenance of the machine 10, the illustrative embodiment provides the hood 36 which is moveable between a closed position and an open position. The closed position may be the lowermost position in which a lower edge of the hood 36 is proximate an upper edge of the skirt 38 to provide an enclosed housing. The open position may be an elevated position in which access to the power distribution unit 46.

The hood 36 may be mounted to the chassis 40 of the excavator via a hinged connection which allows the raising and lowering thereof with relative ease. As best seen in Figure 3, in the illustrated embodiment, the hood 36 comprises a hinged connection 37 towards a front end thereof, specifically on the control pillar portion 36-1. The hinged connection 37 allows the hood 36 to lifted and lowered between closed and open positions. One or more mechanical restraints may be provided, e.g. a gas strut 39 or a touch point between the hood 36 and the chassis 40 may be provided to limit the upward movement of the hood 36 and prevent potential deleterious clashes with the battery pack 42 or other internal components.

The movement of the hood 36 and position and size of the power distribution unit 46 are such that the power distribution unit 46 is exposed when in the open position to allow access to the electrical connections for testing and maintenance purposes. More specifically, in the illustrated embodiment, the hood 36 opens to an extent where the cover plate 68 of the power distribution unit 46 is removeable to allow access to the internal connections and components.

In the illustrated environment, the vertical extent of the opened hood is between 300mm and 450mm, preferably between 350mm and 420mm, however this may be different in alternative embodiments.

In order to provide full access to the interior of the hood 36 and the battery pack 42 the hood 36 can be raised to a further elevated position in some embodiments or removed from the machine entirely. To remove the hood, the hinged connection 37 and mechanical restraint may be disconnected.

The provision of a removable and hinged hood 36 with an access hatch 30 allows for different ways of accessing the interior of the machine 10 as required. Thus, for daily access, for the purposes of charging and isolating the machine, the access hatch 30 may be used. For intermittent access, e.g. for testing and routine maintenance, the hood 36 may be lifted about the hinged connection 37 and for more significant but occasional access, the hood 36 may be fully removed.

Referring to Figures 4 to 8, there is shown a hydraulic tank 48 which is used to contain the hydraulic fluid required for operating the one or more tracks and the hydraulic cylinders. It will be appreciated that the tracks maybe electrically driven rather than hydraulically in some embodiments. Similarly, the actuators on the working arm may be electrically operated rather than hydraulically. Where both the actuators on the working arm and the propulsion drive is fully electric, the machine may not include a hydraulic tank.

In a conventional compact excavator, be it diesel or electric, it is commonplace to include a dedicated cooling pack comprising one or more radiators and a fan unit for cooling the hydraulic fluid. Whilst the size of a cooling pack generally scales with the size of the machine, the presence of a cooling pack can take up valuable space under the hood 36 or elsewhere. The applicants have discovered that for a sufficiently small machine, the cooling requirements are such that an alternative method of cooling may be appropriate.

The present disclosure provides a cooling arrangement in which an air flow is created over the hydraulic tank 48 to provide the requisite cooling, rather than having a dedicated cooling pack as per the convention. This lower level of cooling can be further improved by selecting an appropriate shape and position of the hydraulic tank.

In the illustrated embodiment, the hydraulic tank 48 is elongate and extends in a fore-aft direction to increase the surface area of the tank 48 and ambient cooling. The tank may also be located to one side of the superstructure 14 alongside the skirt 38 to help separate the hydraulic tank 48 from the heat producing components such as the electric motor 52 and inverter 45 so far as is possible.

To provide forced air cooling, a fan 78 is located at one end of the tank 48 and configured to direct air along the length thereof to provide a cooling air flow. In the illustrated embodiment, the fan 78 is provided at a front end of the tank 48 and receives air for outside of the superstructure via an inlet 80 provided in the skirt 38. The flow of air 82 is suitably contained within the skirt 38 so as to pass along the tank 48 and through the surrounding components to provide the necessary cooling. In some embodiments, some form of ducting may be provided to channel the air along the hydraulic tank 48 but this is not the case in the illustrated embodiment where the cooling performance was found to be satisfactory.

The side profile of the hydraulic tank 48 in the illustrated embodiment is shaped to extend around other components thereby increasing the packing density of surrounding components and volume of the tank 48. Hence, as can be seen there are a number of recesses and protuberances along the length of the tank 48. In some embodiments, the hydraulic tank 48 may incorporate one or more features to improve the cooling efficiency if the hydraulic fluid such as, for example, one or more cooling fins or other projections to increase the surface area contact and/or turbulence of the flow of cooling air 82.

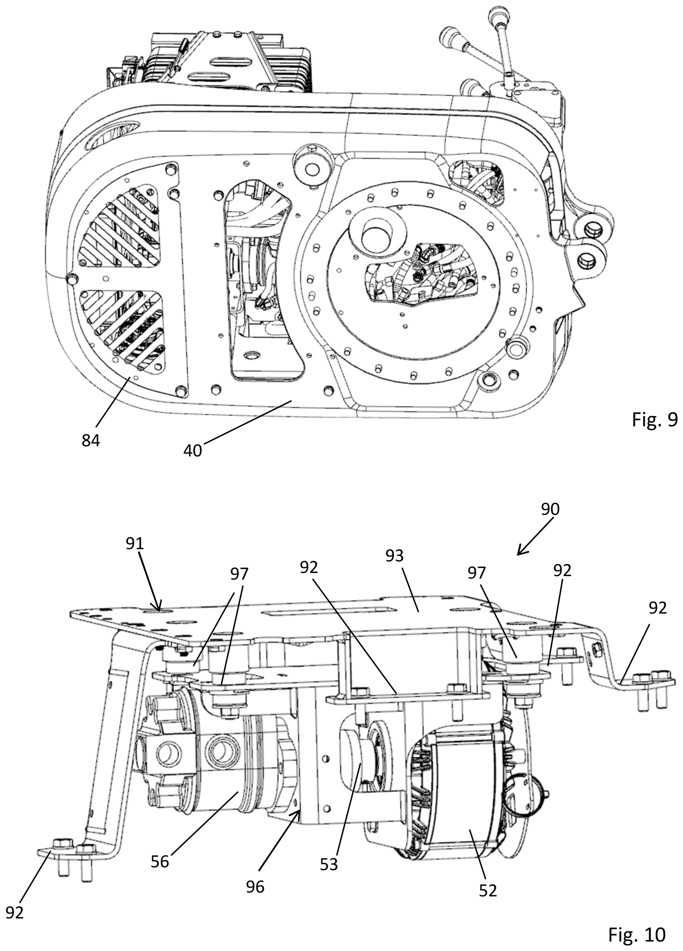

As can be seen from Figure 9, there is an outlet 84 provided on the underside of the superstructure 14 to allow hot air circulated by the fan 78 to escape. In the illustrated embodiment, the outlet 84 is provided by a removable panel having a plurality of apertures therein to provide a grill. Providing an outlet 84 in the underside of the superstructure 14 helps reduce ingress of water and dirt into the housing. However, in another embodiments, the outlet may be located in one of the side walls or an upper side of the skirt or hood.

In addition to providing a cooling arrangement for the hydraulic tank 48, the present disclosure also provides a secondary cooling device for cooling the electric motor 52. As can be seen in Figure 7, the electric motor 52 and hydraulic pump 56 are centrally located beneath the battery pack 42 and connected via a coupling 53.

The cooling of the electric motor 52 may achieved by a second fan 86 located proximate to the electric motor 52 and configured to blow a steady flow of cooling air 87 over an external surface thereof. To ensure suitable cooling from the second fan 86, the fan 86 may be mounted such that a principal axial flow of the fan is directed onto the exterior of the electric motor 52. The principal axial flow may be denoted by the rotational axis of the fan 86.

In the illustrated embodiment, the second fan 86 receives air from within the housing rather than an external inlet 80. As such, the second cooling fan 86 may be thought of as a recirculating fan which moves air around within the body work prior to being exhausted from the outlet 84. However, it will be appreciated that in some embodiments, the second fan 86 may receive air from an external inlet. In yet further embodiments, the first fan 78 may receive air from within the housing rather than from the exterior of the machine via a specific air inlet.

Due to the size, shape and position of the hydraulic tank and the size and typical workloads of the machine 10, no forced air cooling may be required in limited normal operation. However, during prolonged periods of relatively heavy utilisation the temperature of the hydraulic fluid may increase to undesirable levels. In order to avoid this, the temperature of the hydraulic fluid may be measured either directly or indirectly and the respective fan 78, 86 switched on when the temperature reaches a predetermined unacceptable threshold.

In the illustrated embodiment, the first 78 and second 86 cooling fans may be independently operated to match the specific cooling requirements of the hydraulic tank 48 and electric motor 52.

The temperature of the hydraulic fluid may be measured from a temperature sensor (not shown) located within the hydraulic tank 48 or within the enclosed space around the tank. In the illustrated embodiment, the inverter 45 is considered to provide a suitable indication of the ambient temperature the machine is operating in. This allows for the temperature of the hydraulic fluid to be measured indirectly using the temperature of the inverter 45. Hence, as the temperature of the inverter 45 increases beyond a predetermined value the first cooling fan 78 may be switched on.

In order to improve the indirect measurement, a development machine 10 was tested under various ambient temperatures and work cycles with the hydraulic fluid temperature monitored along with the inverter 45 temperature. From this, the relationship between the hydraulic fluid and inverter 45 temperatures were mapped to provide thresholds for switching the first cooling fan 78 on and off in line with the inverter temperature. These temperature thresholds were stored within an on-board controller (not shown). It will be appreciated that the use of the inverter 45 temperature as an indirect way of assessing the hydraulic fluid temperature is beneficial as it removes the need for an additional temperature sensor and associated wiring.

Whilst the cooling of the internal space in which the hydraulic tank is located under the hood 36 is generally sufficient to control the temperature of the hydraulic fluid and electric motor 52 in most use cases, there are certain applications, particularly ones in high ambient temperature environments, which require additional cooling for the motor 52. In such a case the second fan 86 may be activated to provide a dedicated cooling flow to the exterior of the electric motor 52. The temperature for the electric motor 52 may be measured using an internal temperature sensor within the electric motor 52 which already exists in the electric motor 52. As with the control of the first fan 78, the controller may be provided with a look-up table of second fan temperature thresholds which control the activation and deactivation of the second fan 86.

Having separate electric fans 78, 86 to meet specific cooling requirements of the various components in the working machine 10 may be advantageous from an efficiency point of view and also from a noise point of view. As will be appreciated, electric excavators are generally far quieter than their diesel counterparts due to the absence of the engine and the noise of a cooling fan, whilst relatively quiet in itself, does become noticeable. Having two fans 78, 86 which are independently controllable with the second one only being switched on in limited use cases provides for a generally quieter machine. Additionally, providing the first fan 78 on the forward facing lower edge of the skirt 38 or on the underside of the superstructure 14 in some embodiments, may help to minimise the noise experienced by the operator. Similarly, having the second fan located entirely within the hood 36 and acting as a recirculating fan may additionally help reduce noise.

As described previously, the principal components of the excavator 10 powerline include a battery pack 42, an inverter 45, the power distribution unit 46, and the electric motor 52 and hydraulic pump 56, which combine to provide the hydraulic power necessary for propulsion and work effort. Also included in the main electrical infrastructure is the charging unit 44.

To ease the burden of assembly, these components may form one or more sub-assemblies which can be separately mounted and fixed to the superstructure 14 during the manufacture of the machine 10.

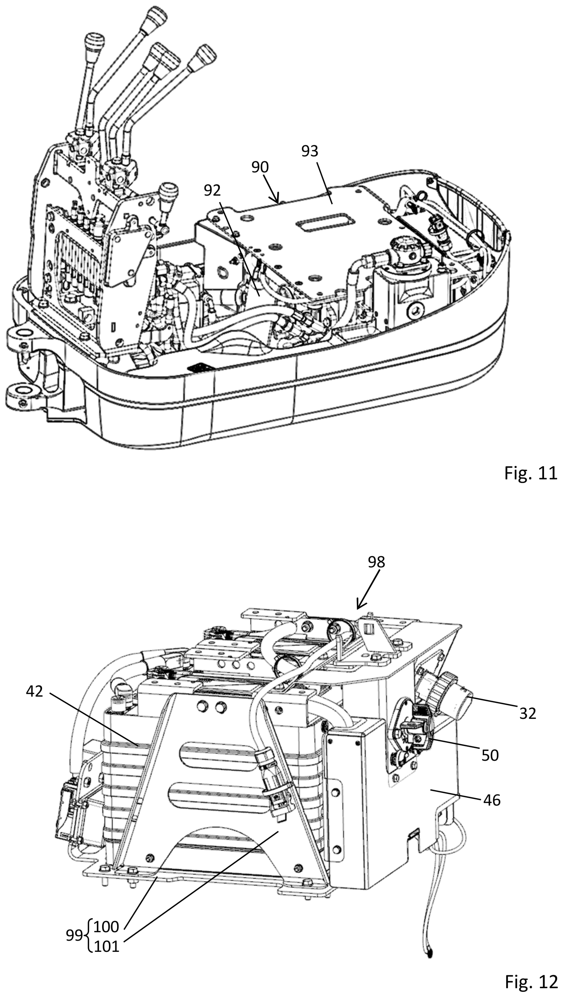

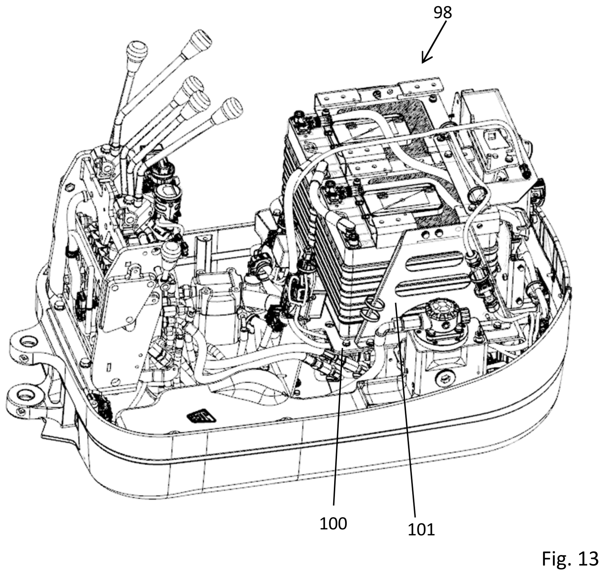

In the illustrated embodiment there are two sub-assemblies. The sub-assembly includes the motor and hydraulic pump as shown in isolation in Figure 10 and in-situ in Figure 11. The second sub-assembly includes the battery pack 42 and power distribution unit 46 as shown in isolation in Figure 12 and in-situ in Figure 13.

More specifically and with reference to Figures 10 and 11, the first sub-assembly 90 includes a main body 91 having mounting attachments 92 which are received on and fixed to corresponding superstructure mounting pads (not shown) . The main body 91 may comprise a plate member 93 or other support at an upper side thereof which provides a platform on to which the second sub-assembly 98 may be mounted. In the illustrated embodiment, the main body 91 comprises a plate member 93 from which five mounting attachments 92 in the form of arms extend. In the illustrated embodiment, there are two arms provided on the rear edge of the main body 91, one on a front edge, and one on each lateral edge, but this may vary in other embodiments.

The electric motor 52 and hydraulic pump 56 are suspended beneath the main body 91 of the first sub-assembly 90 on anti-vibration mounts 97 using suitable bracketry 96. In the illustrated embodiment the electric motor 52 and hydraulic pump 56 are centrally mounted and aligned with respect to the central fore-aft axis of the superstructure 14. However, this is not a limitation and the mounting position may vary other embodiments. The electric motor 52 and hydraulic pump 56 may be considered to be conventional for the purposes of the present disclosure and will not be described further here.

Referring to Figure 12 and 13, it can be seen that the second sub-assembly 98 comprises a frame 99 to which the battery pack 42 is mounted and secured. The frame 99 may comprise a base plate 100 and a plurality of arms 101 which extend up the side of and over on to the top of the battery pack 42 to provide some lateral and vertical restraint. Other supporting metal work may be provided around the battery 42 as required. The battery pack 42 sub-assembly 98 can be mounted onto the first sub-assembly 90 and attached to the plate member 93 of the main body 91 using suitable fixings (e.g. bolts) prior to making the necessary electrical connections.

The inverter 45 may be attached to either the first 90 or second 98 sub-assembly. In the illustrated embodiment, the inverter 45 is attached to the first sub-assembly 90. Having the inverter 45 attached to the first sub-assembly allows the motor 42 to be connected to the inverter 45 and tested prior to being loaded into the machine 10.

The power distribution unit 46 may be attached to either the first 90 or the second 98 sub-assembly. In the illustrated embodiment, as shown in Figure 12, the power distribution unit 46 is attached to the second sub-assembly 98 via suitable metal work allowing the battery pack 52 and other electrical cables associated with the battery pack 52 to be attached prior to assembly. As can also be seen in Figure 12, the second sub-assembly 98 may include the charging port 32 and isolator 50 which may be mounted to the back plate of the power distribution unit 46.

The charging unit 44 may be mounted to the first or second sub-assemblies. In the illustrated embodiment, the charging unit 44 is attached to the second sub-assembly to allow the battery pack 42 to receive a charge before being mounted to the machine 10.

In the illustrated embodiment, the first and second sub-assemblies are separately mounted into the machine. However, in some embodiments the first and second sub-assemblies may be fixed to one another prior to being mounted to the superstructure 14.

The one or more embodiments are described above by way of example only and variations are possible without departing from the scope of protection afforded by the appended claims.

## Claims

1. An excavator comprising:
a ground engaging structure comprising a pair of track assemblies for propelling and steering the excavator;
a rotatable superstructure mounted to the ground engaging structure;
a working arm mounted to the rotatable superstructure, the working arm comprising one or more actuators arranged to operate the working arm;
a hydraulic pump in hydraulic flow communication with the one or more track assemblies and/or the one or more hydraulic actuators to provide propulsive effort or work effort respectively;
a hydraulic tank connected to the hydraulic pump;
at least one electric motor configured to drive the hydraulic pump to provide a flow of hydraulic fluid to propel the one or more track assemblies and/or operate the actuators;
at least one battery for providing electrical power to the hydraulic pump; and,
at least one electrically operated fan configured to provide a flow of cooling air onto the hydraulic tank to cool the hydraulic fluid therein.

2. The excavator of claim 1, wherein the hydraulic tank is elongate and the at least one fan is located and oriented to direct air along the length of the hydraulic tank.

3. The excavator of claim 2, wherein the fan is located towards an end of the hydraulic tank.

4. The excavator of claims 2 or 3, wherein the hydraulic tank is located along a length of the superstructure in a fore-aft direction and extends for at least 50% of the length of the superstructure, preferably at least 75%, and, optionally, wherein the hydraulic tank is located along a lower lateral edge of the superstructure.

5. The excavator of claim 4, wherein the fan is located in a forward or aft portion of the superstructure.

6. The excavator of claim 5, wherein the fan comprises a fan inlet in flow communication with the exterior of the superstructure and, optionally, wherein superstructure comprises body work which provides a housing for the hydraulic tank, wherein the fan inlet comprises an aperture located in a skirt portion of the body work.

7. The excavator of any preceding claim, wherein the at least one fan is a first fan, and wherein the excavator comprises at least a second fan, wherein the second fan is configured to provide a flow of cooling air on to the electric motor to cool the electric motor, wherein the second fan is located within the superstructure and configured to recirculate air within the superstructure and onto the electric motor.

8. The excavator of claim 9, wherein the second fan is located in a flow path of the first fan such that air from the first fan enters the second fan for recirculation within the superstructure and optionally, wherein the second fan is located towards a second end of the elongate hydraulic tank and the first fan is located towards a first end.

9. The excavator of any preceding claim, wherein the superstructure comprises an outlet for cooling air to exit the superstructure, wherein the outlet is provided on an underside of the superstructure.

10. The excavator of any of claims 7 to 9, further comprising a controller configured to operator the first fan and second fan, wherein the controller is configured to:
receive an indication of the operating temperature of the hydraulic fluid and operate the first fan when the indicated operating temperature of the hydraulic fluid is above a first threshold, and
receive an operating temperature of the electric motor and operate the second fan when the operating temperature of the electric motor is above a second threshold.

11. The excavator of claim 10, wherein an inverter used to control the electric motor comprises a temperature sensor and wherein temperature sensor is used to provide the indication of the operating temperature of the hydraulic fluid, and, optionally, wherein the electric motor comprises a temperature sensor to provide the operating temperature of the electric motor.

12. The excavator of any preceding claim, further comprising a power distribution unit located proximate the at least one battery, the power distribution unit comprising a plurality of connectors for connecting wiring associated with the electric motor and/or battery,
wherein the at least one battery and power distribution unit is mounted to the rotatable superstructure and housed beneath a hood which is hinged from a forward edge thereof such that raising the hood about the hinge exposes the power distribution unit at a rear end of the rotatable superstructure, and, optionally, further comprising a charging port for connecting a charging cable, wherein the hood comprises an access panel which is hinged or otherwise removable to provide access to the charging port, and, further optionally, wherein the access hatch is located on a rear facing surface of the superstructure.

13. The excavator of claim 12, wherein the hood is removable to provide access to the at least one battery pack, and wherein raising the hood about the hinged connection does not provide access to the at least one battery.

14. The excavator of any preceding claim, wherein the excavator is a micro-excavator having a transport mass of less than 1.5T.

15. The excavator of any preceding claim, wherein the electric motor and hydraulic pump are located on a first sub-assembly, and the at least one battery is located on a second sub-assembly, and, optionally, wherein the first sub-assembly receives and provides structural support for the second sub-assembly and further optionally, wherein the first sub-assembly is located below the second sub-assembly within the superstructure, optionally wherein a power distribution unit is connected to the second sub-assembly and an inverter is connected to the second sub-assembly.
